## Europäisches Patentamt
## European Patent Office
## Office européen des brevets

(19)

(11) Veröffentlichungsnummer : **0 155 397**
**B1**

(12) # EUROPÄISCHE PATENTSCHRIFT

(45) Veröffentlichungstag der Patentschrift :
**02.03.88**

(21) Anmeldenummer : **84115817.3**

(22) Anmeldetag : **19.12.84**

(51) Int. Cl.⁴ : **F 16 L 5/02**

(54) **Durchführung für eine Leitung, wie Kabel, Rohr oder dergl., durch eine Wandöffnung.**

(30) Priorität : **06.03.84 DE 3408122**
**30.08.84 DE 3431805**

(43) Veröffentlichungstag der Anmeldung :
**25.09.85 Patentblatt 85/39**

(45) Bekanntmachung des Hinweises auf die Patenterteilung : **02.03.88 Patentblatt 88/09**

(84) Benannte Vertragsstaaten :
**AT BE CH DE FR GB IT LI NL SE**

(56) Entgegenhaltungen :
**DE-A- 2 146 126**
**DE-A- 2 317 752**
**DE-B- 40 986**
**FR-E- 75 969**
**US-A- 2 493 556**
**US-A- 3 548 079**
**US-A- 3 758 066**

(73) Patentinhaber : **Hauff, Werner**
**Herlsbühlstrasse 19**
**D-7925 Dischingen-Ballmertshofen (DE)**

(72) Erfinder : **Hauff, Werner**
**Herlsbühlstrasse 19**
**D-7925 Dischingen-Ballmertshofen (DE)**

(74) Vertreter : **Fay, Hermann, Dipl.-Phys. Dr.**
**Ensingerstrasse 21 Postfach 1767**
**D-7900 Ulm (Donau) (DE)**

## Beschreibung

Die Erfindung betrifft eine Durchführung für eine Leitung wie Kabel Rohr oder dergl. durch eine Wandöffnung, bestehend aus einem elastischen Paßstück, das einerseits gegen die Leitung, andererseits gegen die Laibung der vom Paßstück auszufüllenden Wandöffnung abdichtet, und aus einer das Paßstück in der Wandöffnung elastisch verpressenden Druckvorrichtung, wobei das Paßstück eine die Leitung kreisförmig umgebende, zur Wandaußenseite hin offene Ringnut aufweist, und die Druckvorrichtung von einem axial in die Ringnut eindrückbaren Preßring gebildet ist, dessen Wandstärke größer als die Breite der unverformten Ringnut im unverspannten Paßstück ist.

Bei einer aus der US-A-3 548 079 bekannten Durchführung dieser Art vergrößert sich die Wandstärke des Preßringes, im Axialschnitt gesehen, keilförmig vom in Einsteckrichtung vorderen Ende aus, wozu die äußere Umfangsfläche des Preßringes entsprechend konisch ausgebildet ist. Außerdem ist an der äußeren oder inneren Umfangsfläche des Preßringes ein Gewinde vorgesehen, das in ein Gegengewinde an der gegenüber liegenden Umfangsfläche der Ringnut greift. Der mit Hilfe dieser Gewinde in die Ringnut eingeschraubte Preßring weitet die Ringnut auf und verpreßt dadurch das Paßstück gegen die Laibung der Wandöffnung. Dabei erstreckt sich die keilförmige Vergrößerung der Wandstärke des Preßringes über dessen gesamte in die Ringnut greifende axiale Länge, was bei axial langen Paßstücken eine große Wandstärke des Preßringes am dicken Ende seines Keilprofils und dem entsprechend große radiale Bauabmessungen der Durchführung insgesamt ergibt. Die Abdichtung des Paßstücks gegenüber der Leitung erfolgt mit Hilfe einer Dichtmanschette, die einstückig am Paßstück ausgebildet ist und auf die Leitung thermisch aufgeschrumpft werden muß, was einen eigenen aufwendigen Arbeitsgang bei der Montage der Durchführung erfordert.

Der Erfindung liegt die Aufgabe zugrunde, eine Durchführung der eingangs genannten Art so auszubilden, daß mit Hilfe des Preßringes eine Abdichtung des Paßstückes auch gegenüber der Leitung möglich ist, und daß der Preßring auch bei axial langen Abmessungen geringe radiale Wandstärke behält und trotzdem über seine ganze Länge hinweg überall eine gute Verpressung des Paßstückes gegen Leitung und Laibung gewährleistet.

Diese Aufgabe wird nach der Erfindung dadurch gelöst, daß der Preßring über seine gesamte axiale Länge in Ringsegmente mit einem Zentriwinkel von höchstens 180° geteilt ist, und daß die Ringsegmente durch tangential zum Ringumfang gerichtete Zapfen und Zapfenaufnahmen lösbar miteinander verbunden sind.

Durch die erfindungsgemäße Teilung des Preßringes wird erreicht, daß sich die Ringsegmente in Richtung der sie jeweils verbindenden Zapfen und Zapfenaufnahmen gegeneinander verstellen können und also der Preßring im Ganzen bezüglich seines Durchmessers gleichsam « atmen » kann. Der Preßring vermag daher seine Druckwirkung radial sowohl nach außen als auch nach innen auf das Paßstück zu entfalten und dieses somit gegen die Leitung wie gegen die Laibung zu verpressen, wozu lediglich Voraussetzung ist, daß der kleinstmögliche Innendurchmesser des Preßringes kleiner als der Innendurchmesser der unverformten Ringnut im unverspannten Paßstück ist. Im Rahmen dieser dem Preßring durch seine Teilung ermöglichten Durchmesseranpassung wirkt der Preßring auch ausgleichend zwischen den radial auswärts und einwärts gerichteten Preßkräften auf das Paßstück, so daß dieses gleichmäßig gegen die Leitung einerseits und gegen die Laibung andererseits verpreßt und abgedichtet wird. Daher bedarf es für die Verpressung des Paßstückes keiner Konizität der äußeren und/oder inneren Umfangsfläche des Preßringes über dessen gesamte axiale Länge ; diese Flächen können im wesentlichen zylindrisch sein, wenn nur die Wandstärke des Preßringes größer als die Breite der unverformten Ringnut im unverspannten Paßstück ist. Auch ein axial langer Preßring kann also mit gleichmäßig geringer Wandstärke ausgebildet und dennoch eine überall gute Verpressung des Paßstückes ergeben. Das Maß dieser Verpressung richtet sich im wesentlichen nur nach dem Verhältnis der Wandstärke des Preßringes einerseits und der demgegenüber kleineren Breite der Ringnut im noch unverformten und unverspannten Zustand des Paßstücks andererseits, so daß durch Wahl dieses Verhältnisses die Verpressung des Paßstückes in der Wandöffnung nach Wunsch eingestellt werden kann.

Eine bevorzugte Ausführungsform der Erfindung ist im Ergebnis dadurch gekennzeichnet, daß sich die Wandstärke des Preßringes, im Axialschnitt gesehen, vom in Einsteckrichtung vorderen Ende aus keilförmig vergrößert und diese keilförmige Vergrößerung der Wanddicke nur auf einen vorderen Teil der in die Ringnut greifenden Preßringwand beschränkt ist, an den sich durchmessergleich ein im wesentlichen zylindrischer Wandteil anschließt, und daß die Ringnut im unverformten und unverspannten Paßstück im wesentlichen zylindrische Innen- und Außenflächen aufweist, wobei die Nutbreite kleiner als die Wanddicke des zylindrischen Wandteiles des Preßringes ist.

Eine weiter bevorzugte Ausführungsform ist dadurch gekennzeichnet, daß der Preßring an der Außen- und/oder Innenfläche seiner in die Ringnut greifenden Wand eine in Umfangsrichtung verlaufende Rillierung aufweist, die ein Gewinde bildet, mit dem der Preßring in das Paßstück einschraubbar ist, und daß sich die Rillierung nur am sich in der Wanddicke vergrössernden vorderen Wandteil befindet, während der zylindrische Wandteil gewindefrei ist, und daß der Preßring außen mit einer Ringschulter der Stirn des Paßstückes anliegt. Durch die Beschränkung des Gewindes nur auf den vorderen, sich in der Wanddicke erweiternden Teil des Preßringes wird erreicht, daß das Paßstück zwischen diesem Teil und der Ringschulter des Preßringes axial zusammen gestaucht wird, wenn der in seiner gesamten axialen Länge in die Ringnut eingetretene und sich mit der Ringschulter gegen das Paßstück angelegte Preßring noch tiefer in die Ringnut vorgeschraubt wird. Diese axiale Stauchung des Paßstückes ergibt eine zusätzliche radiale Vergrößerung des Paßstückquerschnitts und dadurch eine weitere Verbesserung der Dichtwirkung des Paßstückes gegenüber der Leitung und der Laibung der Wandöffnung. Es genügt, die Rillierung nur am Preßring vorzusehen. Der Preßring kann sich dann das zum Vorschrauben erforderliche Gegengewinde im Paßstück durch entsprechende elastische Verformung desselben gleichsam selbsttätig schaffen. Im zylindrischen Teil ist dann eine durch keinerlei Rillierung gestörte dichte Flächenanlage zwischen Preßring und Paßstück möglich.

Es empfiehlt sich, die das Gewinde bildende Rillierung bis zum Beginn des zylindrischen Wandteiles verlaufen zu lassen, so daß der letzte Gewindegang im Übergang zwischen dem sich in der Wanddicke keilförmig vergrößernden vorderen Wandteil und dem sich daran anschließenden zylindrischen Wandteil liegt.

Im folgenden wird die Erfindung an einem in der Zeichnung dargestellten Ausführungsbeispiel näher erläutert ; es zeigen :

Fig. 1 einen Axialschnitt durch eine Wanddurchführung nach der Erfindung,

Fig. 2 einen Axialschnitt durch den Preßring nach Fig. 1 in einer im Vergleich zu Fig. 1 vergrößerten Darstellung,

Fig. 3 eine Stirnansicht des Preßringes nach Fig. 1 in teilweise auseinander gezogenem Zustand der beiden Preßringteile,

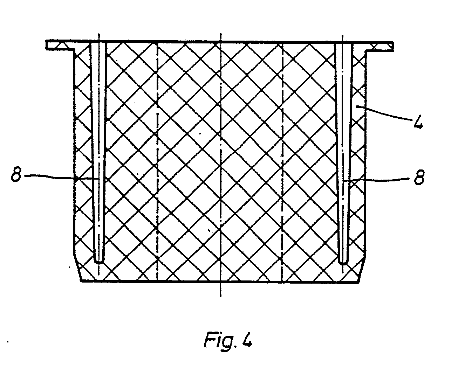

Fig. 4 einen Axialschnitt durch das Paßstück der Wanddurchführung nach Fig. 1 in ebenfalls vergrößerter Darstellung und in noch unverformten und unverspanntem Zustand.

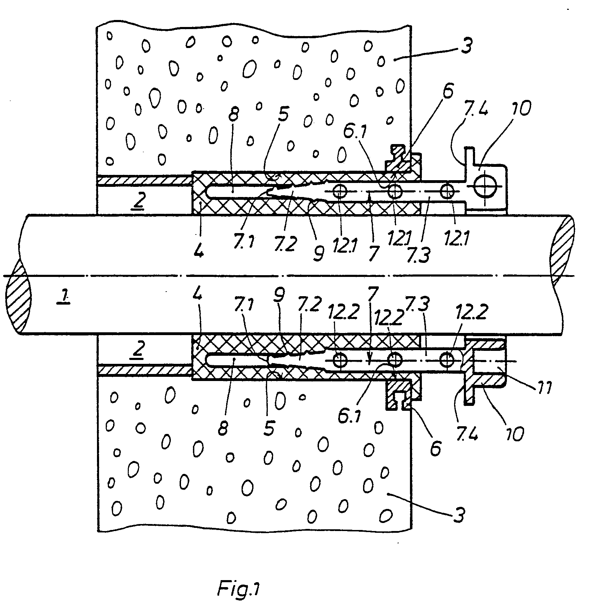

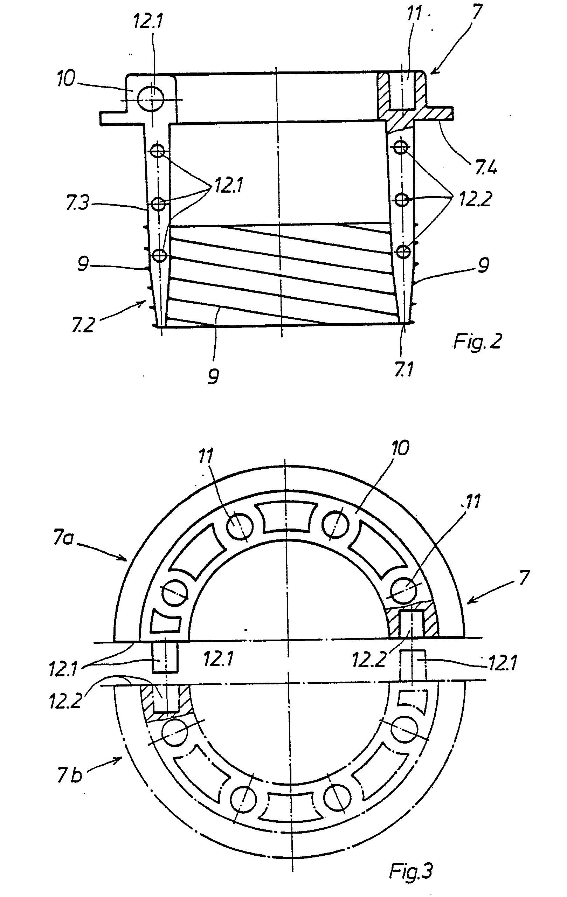

In der Zeichnung ist die Leitung 1, beispielsweise ein Kabel mit im einzelnen nicht dargestelltem Innenaufbau, durch die Öffnung 2 einer Betonwand 3 hindurchgeführt. Die Durchführung umfaßt ein elastisches Paßstück 4 aus Gummi oder ähnlich elastisch verformbarem Werkstoff, das einerseits gegen die Leitung 1, andererseits gegen die Laibung 5 der vom Paßstück 4 auszufüllenden Wandöffnung 2 abdichtet. Mit 6 ist eine fest in die Wand 3 eingelassene Stirnplatte bezeichnet, die mit ihrer inneren Umfangsfläche 6.1 einen Teil der Laibung 5 bilden kann. Außerdem ist eine das Paßstück 4 in der Wandöffnung 2 elastisch verpressende Druckvorrichtung vorgesehen, die von einem Preßring 7 gebildet ist, der eine Rillierung in Form eines Gewindes 9 trägt. Im einzelnen besitzt das Paßstück 4 eine die Leitung 1 kreisförmig umgebende, zur Wandaußenseite hin offene Ringnut 8, die in axialer Richtung über die Länge desjenigen Bereiches reicht, in der das Paßstück 4 gegenüber der Leitung 1 bzw. der Laibung 5 abdichten soll. In diese Ringnut 8 ist axial der Preßring 7 eingeschraubt, dessen Wandstärke größer ist als die Breite der unverformten Ringnut 8 im noch unverspannten Paßstück 4. Der Preßring bewirkt daher beim Einschrauben in die Ringnut 8 eine Werkstoffverdrängung im Paßstück 4 mit dem Ergebnis, daß sich das Paßstück 4 der Leitung 1 einerseits und der Laibung 5 andererseits mit entsprechendem Druck anlegt. Die Wanddicke des Preßrings 7 vergrößert sich, gesehen im Axialschnitt entsprechend Fig. 2, von dem in Einsteckrichtung vorderen Ringende 7.1 aus keilförmig längs eines vorderen Teils 7.2 der in die Ringnut 8 greifenden Preßringwand. Im Ausführungsbeispiel ist der Fall einer keilförmigen Erweiterung sowohl der inneren als auch der äußeren Ringfläche dargestellt, so daß das Axialprofil der Wand nach Art eines Doppelkeiles ausgebildet ist. An diesen vorderen, sich erweiternden Wandteil 7.2 schließt sich durchmessergleich ein im wesentlichen zylindrischer Wandteil 7.3 an, der lediglich eine sehr geringe Schräge von nur etwa 1° besitzt, um bei der Herstellung die Entformung des Preßringes aus der Spritzgußform zu erleichtern. Der Zylindrische Wandteil 7.3 reicht bis zu einer Ringschulter 7.4 an dem aus der Ringnut 8 vorstehenden Ende des Preßringes 7, wobei dieses Ende als Bund 10 mit zum Ansatz eines geeigneten Schlüssels über den Umfang verteilt angeordneten Stirnlöchern 11 ausgebildet ist, die zur Aufnahme von am Schlüssel in geeigneter Weise vorgesehenen Schlüsselzapfen dienen. An der Außen- und der Innenfläche nur des sich keilförmig erweiternden vorderen Wandteils 7.2 befindet sich das Gewinde 9, welches das Einschrauben des Preßrings 7 in das Paßstück 4 ermöglicht. Der letzte Gang des Gewindes 9 befindet sich im Übergang zwischen dem sich in der Wanddicke keilförmig vergrössernden vorderen Wandteil 7.2 und dem sich daran anschließenden zylindrischen Wandteil 7.3. Eines entsprechenden Muttergewindes in der Ringnut 8 bedarf es nicht, da sich die Gänge des Gewindes 9 formschlüssig in den elastischen Werkstoff des Paßstücks 4 eindrücken. Die Ringnut 8 ist im unverformten und unverspannten Paßstück 4 im wesentlichen, d. h. wiederum bis auf eine geringe Entformungsschräge von etwa 1° zylindrisch, besitzt also eine im wesentlichen zylindrische Innenfläche und zylindrische Außenfläche, wobei die Nutbreite zwischen beiden Flächen kleiner als die Wanddicke des zylindrischen Wandteils 7.3 des Preßrings 7 ist. Der Preßring 7 ist über seine gesamte Länge in zwei Ringsegmente 7a, 7b mit einem Zentriwinkel von 180° geteilt. Die beiden Ringsegmente 7a, 7b sind durch tangential zum Ringumfang gerichtete Zapfen 12.1 und zugeordnete Zapfenaufnahmen 12.2 lösbar verbunden. Der kleinste Innendurchmesser des Preßrings 7, also bei vollständig zusammengesteckten Ringsegmenten 7a, 7b ist noch etwas kleiner als der Durchmesser der inneren Umfangsfläche der Ringnut 8, so daß der Preßring durch Zusammendrücken der Ringsegmente 7a, 7b auch einen Druck auf das Paßstück 4 radial nach innen ausüben kann. Statt in nur zwei Ringsegmente 7a, 7a kann der Preßring 7 selbstverständlich auch in mehr als zwei Ringsegmente geteilt werden, beispielsweise in drei Ringsegmente mit je 120°, vier Ringsegmente mit je 90°, sechs Ringsegmente mit je 60° usw. In jedem Fall wird erreicht, daß sich der Preßring 7 im Durchmesser radial verändern und dadurch das Paßstück 4 überall und sowohl nach innen als auch nach außen gleichmäßig verpressen kann. Im übrigen bietet der geteilte Preßring 7 den Vorteil, daß die Ringsegmente von der Seite her an der dazwischen liegenden Leitung zusammengefügt werden können und die Leitung nicht durch den Preßring hindurchgezogen werden muß, was bei einstückigen Preßringen unerläßlich wäre.

**Patentansprüche**

1. Durchführung für eine Leitung (1), wie Rohr, Kabel oder dergl. durch eine Wandöffnung (2), bestehend aus einem elastischen Paßstück (4), das einerseits gegen die Leitung (1), andererseits gegen die Laibung (5) der vom Paßstück (4) auszufüllenden Wandöffnung (2) abdichtet, und aus einer das Paßstück (4) in der Wandöffnung (2) elastisch verpressenden Druckvorrichtung, wobei das Paßstück (4) eine die Leitung (1) kreisförmig umgebende, zur Wandaußenseite hin offene Ringnut (8) aufweist, und die Druckvorrichtung von einem axial in die Ringnut (8) eindrückbaren Preßring (7) gebildet ist, dessen Wandstärke größer als die Breite der unverformten Ringnut (8) im unverspannten Paßstück (4) ist, dadurch gekennzeichnet, daß der Preßring (7) über seine gesamte axiale Länge in Ringsegmente (7a, 7b) mit einem Zentriwinkel von höchstens 180° geteilt ist und daß die Ringsegmente (7a, 7b) durch tangential zum Ringumfang gerichtete Zapfen (12.1) und Zapfenaufnahmen (12.2) lösbar miteinander verbunden sind.

2. Durchführung nach Anspruch 1, dadurch gekennzeichnet, daß sich die Wandstärke des Preßringes (7), im Axialschnitt gesehen, vom in Einsteckrichtung vorderen Ende (7.1) aus keilförmig vergrößert und diese keilförmige Vergrößerung nur auf einen vorderen Teil (7.2) der in die Ringnut (8) greifenden Preßringwand beschränkt ist, an den sich durchmessergleich ein im wesentlichen zylindrischer Wandteil (7.3) anschließt, und daß die Ringnut (8) im unverformten und unverspannten Paßstück (4) im wesentlichen zylindrische Innen- und Außenflächen aufweist, wobei die Nutbreite kleiner als die Wanddicke des zylindrischen Wandteiles (7.2) des Preßrings (7) ist.

3. Durchführung nach Anspruch 2, dadurch gekennzeichnet, daß der Preßring (7) an der Außen- und/oder Innenfläche seiner in die Ringnut (8) greifenden Wand eine in Umfangsrichtung verlaufende Rillierung aufweist, die ein Gewinde (9) bildet, mit dem der Preßring (7) in das Paßstück (4) einschraubbar ist, und daß sich die Rillierung nur am sich in der Wanddicke vergrößernden vorderen Wandteil (7.2) befindet, während der zylindrische Wandteil (7.3) gewindefrei ist, und daß der Preßring (7) außen mit einer Ringschulter (7.4) der Stirn des Paßstückes (7) anliegt.

4. Durchführung nach den Ansprüchen 2 und 3, dadurch gekennzeichnet, daß der letzte Gewindegang im Übergang zwischen dem sich in der Wanddicke keilförmig vergrößernden vorderen Wandteil (7.2) und dem sich daran anschließenden zylindrischen Wandteil (7.3) liegt.

5. Durchführung nach Anspruch 3, dadurch gekennzeichnet, daß die Rillierung nur am Preßring (7) vorgesehen ist.

**Claims**

1. An arrangement for passing a conduit (1) such as a pipe, cable or the like through a wall opening (2), comprising a resilient fitting member (4) which on the one hand seals against the conduit (1) and on the other hand against the inside surface (5) of the wall opening (2) which is to be filled by the fitting member (4), and a pressing means for resiliently pressing the fitting member (4) into the wall opening (2), wherein the fitting member (4) has an annular groove (8) which extends around the conduit (1) in a circular configuration and which is open towards the outward side of the wall, and the pressing means is formed by a pressure ring (7) which can be pressed axially into the annular groove (8) and whose wall thickness is greater than the width of the underformed annular groove (8) in the non-stressed fitting member (4), characterised in that the pressure ring (7) is divided over its entire axial length into ring segments (7a, 7b) with a sector angle of at most 180°, and that the ring segments (7a, 7b) are releasably connected together by pegs (12.1) and peg receiving means (12.2), which are directed tangentially with respect to the periphery of the ring.

2. An arrangement according to claim 1 characterised in that the wall thickness of the pressure ring (7), as viewed in axial section, increases in size in a tapering configuration from the end (7.1) which is the front end in the direction of insertion and said tapering enlargement is restricted only to a front portion (7.2) of the pressure ring wall which engages into the annular groove (8), a substantially cylindrical wall portion (7.3) adjoining said front portion (7.2), in equal-diameter relationship, and that the annular groove (8) in the underformed and non-stressed fitting member (4) has substantially cylindrical inside and outside surfaces, wherein the width of the groove is less than the wall thickness of the cylindrical wall portion (7.2) of the pressure ring (7).

3. An arrangement according to claim 2 characterised in that on the outside and/or inside surface of its wall which engages into the annular groove (8), the pressure ring (7) has a groove configuration which extends in the peripheral direction and which forms a screw thread (9) with which the pressure ring (7) can be screwed into the fitting member (4), and that the groove configuration is disposed only on the front wall portion (7.2) which increases in wall thickness while the cylindrical wall portion (7.3) is without a screwthread, and that the pressure ring (7) bears on the outside by way of an annular shoulder (7.4) against the end of the fitting member (4).

4. An arrangement according to claims 2 and 3 characterised in that the last screw pitch is disposed in the transition between the front wall portion (7.2) which is enlarged in wall thickness in a tapering configuration, and the adjoining cylindrical wall portion (7.3).

5. An arrangement according to claim 3 characterised in that the groove configuration is provided only on the pressure ring (7).

**Revendications**

1. Traversée pour conduit (1), comme par exemple un tube, un câble ou analogue, ménagée dans une ouverture murale (2) et constituée par un organe élastique d'adaptation (4), qui établit une étanchéité d'une part vis-à-vis du conduit (1) et d'autre part vis-à-vis de la surface intérieure (5) de l'ouverture murale (2), qui doit être remplie par l'organe d'adaptation (4), et par un dispositif de compression qui repousse élastiquement l'organe d'adaptation (4) dans l'ouverture murale (2), l'organe d'adaptation (4) comportant une gorge annulaire (8), qui entoure circulairement le conduit (1) et s'ouvre en direction de la face extérieure du mur, et le dispositif de compression étant formé par une bague de serrage (7) pouvant être enfoncée axialement à l'intérieur de la gorge annulaire (8) et dont l'épaisseur de paroi est supérieure à la largeur de la gorge annulaire non déformée (8) ménagée dans l'organe d'adaptation (4) non serré, caractérisée en ce que la bague de serrage (7) est subdivisée, sur toute sa longueur axiale, en segments annulaires (7a, 7b) possédant un angle au centre égal au maximum à 180° et que les segments annulaires (7a, 7b) sont reliés entre eux de façon détachable au moyen de tétons (12.1) et de logements (12.2), dirigés tangentiellement par rapport au pourtour de la bague.

2. Traversée selon la revendication 1, caractérisée en ce que, lorsque l'on considère une coupe axiale, l'épaisseur de paroi de la bague de serrage (7) augmente en forme de coin à partir de l'extrémité avant (7.1) dans la direction d'enfichage et que cet élargissement en forme de coin est limité uniquement à une partie avant (7.2) de la paroi de la bague de serrage, qui s'engage dans la gorge annulaire (8) et à laquelle se raccorde, avec un même diamètre, un élément de paroi (7.3) sensiblement cylindrique, et que la gorge annulaire (8) possède des surfaces intérieure et extérieure sensiblement cylindriques, lorsque l'organe d'adaptation (4) est à l'état non déformé et non serré, la largeur de la gorge étant inférieure à l'épaisseur de paroi de l'élément de paroi cylindrique (7.2) de la bague de serrage (7).

3. Traversée selon la revendication 2, caractérisée en ce que la bague de serrage (7) comporte, sur la surface extérieure et/ou intérieure de sa paroi s'engageant dans la gorge annulaire (8), un nervurage qui s'étend dans la direction circonférentielle et forme un filetage (9), à l'aide duquel la bague de serrage (7) peut être vissée dans l'organe d'adaptation (4), et que le nervurage est présent uniquement sur l'élément de paroi avant (7.2), dont l'épaisseur de paroi augmente, tandis que l'élément de paroi cylindrique (7.3) ne comporte aucun filetage, et que la bague de serrage (7) s'applique extérieurement par un épaulement annulaire (7.4) contre la face frontale de l'organe d'adaptation (4).

4. Traversée selon les revendications 2 et 3, caractérisée en ce que la dernière spire du filetage est située dans la zone de jonction entre l'élément de paroi avant (7.2), dont l'épaisseur de paroi augmente en forme de coin, et l'élément de paroi cylindrique (7.3) qui s'y raccorde.

5. Traversée selon la revendication 3, caractérisée en ce que le nervurage est prévu uniquement sur la bague de serrage (7).

Fig.1

1

Fig. 2

Fig.3

Fig. 4